# EUROPEAN PATENT APPLICATION

(11) **EP 4 603 267 A1**
(43) Date of publication of application: **20.08.2025**
(21) Application number: 24185822.4
(22) Date of filing: 01.07.2024
(51) Int. Cl.: B29D 30/06

(54) **TREAD MOLD AND TIRE CURING MOLD**

(30) Priority: 19.02.2024 KR 20240023708; 25.04.2024 KR 20240055355
(71) Applicant: Nexen Tire Corporation, Yangsan-si, Gyeongsangnam-do 50592 (KR)
(72) Inventor: KANG, Jun, 07594 Seoul (KR)
(74) Representative: Mewburn Ellis LLP

(57) **Abstract**

Provided is a tire curing mold and, particularly, a tread mold formed for use in a curing process for a green tire, wherein the tread mold includes a pattern segment having a pattern surface disposed to face the green tire during the curing process, a back segment disposed outside the pattern segment, and a middle segment arranged between the pattern segment and the back segment.

## Description

### BACKGROUND

### 1. Field

The disclosure relates to a tread mold and a tire curing mold.

### 2. Description of the Related Art

In the process of manufacturing a pneumatic tire, a forming (shaping) process refers to transporting semi-finished products that have been processed according to specifications in previous processes, namely, rolling, extrusion, cutting, and bead processes, assembling them in a molding machine according to specifications to produce a green case, and then transferring the produced green case to a curing process.

The following curing process of the tire process is a process in which the produced green case is put into a mold and cured for a certain period of time by supplying certain pressure and heat from inside and outside of the mold so as to produce an elastic rubber tire. Three major elements of curing are time, pressure, and temperature, and curing methods include steam curing, hot water curing, gas curing, and the like.

A tire obtains its final shape through a curing process. Specifically, the pattern of tread sections of the tire and the shape of sides are generated.

However, the process of curing a tire is a precise process, and is not easy to form precise tire treads through control. In particular, there is a difficulty in controlling a curing device and curing method for forming different tread patterns according to various tires.

### SUMMARY

The disclosure has been derived to improve the above problem, and an aspect of the disclosure is to provide a tread mold and a tire curing mold that can improve convenience and efficiency of a tire curing process.

Additional aspects will be set forth in part in the description which follows and, in part, will be apparent from the description, or may be learned by practice of the presented embodiments of the disclosure.

One embodiment of the disclosure relates to a tread mold formed for use in a curing process for a green tire, wherein the tread mold includes a pattern segment having a pattern surface disposed to face the green tire during the curing process, a back segment disposed outside the pattern segment, and a middle segment arranged between the pattern segment and the back segment.

In one embodiment, the back segment, the middle segment, and the pattern segment may be formed to be attachable to and detachable from each other.

In one embodiment, the pattern segment may include a coupling surface formed on a surface opposite to the pattern surface of the pattern segment, the middle segment may include an inner surface on a surface facing the pattern segment, and the coupling surface and the inner surface of the middle segment may have shapes corresponding to each other.

In one embodiment, the middle segment may include an outer surface formed on a surface opposite to the inner surface, the back segment may include a fastening surface on a surface facing the middle segment, and the outer surface and the fastening surface may have shapes corresponding to each other.

In one embodiment, the pattern surface of the pattern segment may have a curved surface shape corresponding to the green tire along a circumferential direction of the green tire, and the fastening surface may have a flat surface shape.

In one embodiment, the pair of middle segments coupled to the pair of pattern segments may be coupled to correspond to the one back segment.

In a selective embodiment, the pattern segment may include a plurality of pattern puzzle pieces, and the middle segment may include a plurality of middle puzzle pieces corresponding to the plurality of pattern puzzle pieces.

Another embodiment of the disclosure relates to a tire curing mold formed to perform a curing process for a green tire, and provides a tire curing mold that includes a tread mold disposed to face one surface of the green tire during the curing process, a first side mold disposed on one side of the tread mold, and a second side mold disposed on another side of the tread mold to face the first side mold, wherein the tread mold includes a pattern segment including a pattern surface disposed to face the green tire during the curing process, a back segment disposed outside the pattern segment, and a middle segment arranged between the pattern segment and the back segment.

In one embodiment, the first side mold or the second side mold may include a base plate coupled to a container of a curing machine during the curing process, and an inner plate coupled to the base plate to form a profile of a sidewall section of the tire.

In one embodiment, the base plate and the inner plate may be formed to be attachable to and detachable from each other.

In a selective embodiment, the pattern segment may include a plurality of hollow portions and support portions therein.

In a selective embodiment, the inner plate may include a plurality of hollow portions and support portions therein.

Other aspects, features, and advantages of another embodiment of the disclosure in addition to those described above will become apparent from the following drawings, claims, and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view illustrating a tread mold according to one embodiment of the disclosure;
FIG. 2 is a partially exploded perspective view schematically illustrating a tread mold according to one embodiment of the disclosure;
FIG. 3 is a partially exploded perspective view schematically illustrating a selective embodiment of the tread mold of FIG. 1;
FIG. 4 is a perspective view illustrating a tire curing mold according to one embodiment of the disclosure;
FIG. 5 is a perspective view schematically illustrating a first side mold according to one embodiment of the disclosure;
FIG. 6 is a partial cross-sectional view schematically illustrating a pattern segment according to a selective embodiment of the disclosure;
FIG. 7 is a partial cross-sectional view schematically illustrating a pattern segment according to another selective embodiment of the disclosure; and
FIG. 8 is a partial cross-sectional view schematically illustrating a pattern segment according to still another selective embodiment of the disclosure; and

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, a description will be given in detail of embodiments disclosed herein, with reference to the accompanying drawings. For description with reference to the drawings, the same or equivalent components may be given the same reference numerals, and a redundant description thereof will be omitted.

Since the embodiments of the disclosure can be modified in various ways, specific embodiments will be illustrated in the drawings and specifically described in the detailed description. The effects and features of the embodiments of the disclosure and methods for achieving the same will be clearly understood by referring to descriptions to be given below along with the drawings. However, the embodiments of the disclosure are not limited to the embodiments disclosed below and may be implemented in various forms.

In order to clearly explain the disclosure in the drawings, parts that are not related to the description are omitted, and similar parts are given similar reference numerals throughout the disclosure.

In the embodiments disclosed below, terms such as "first" and "second" are used not in a limiting sense but for the purpose of distinguishing one component from another component.

In the embodiments disclosed below, a singular representation may include a plural representation unless it represents a definitely different meaning from the context.

In the embodiments disclosed below, terms such as "include" or "has" should be understood that they are intended to indicate an existence of features or components, disclosed herein, and also it is not excluded in advance that one or more features or components are likewise utilized.

In the embodiments disclosed below, when a part such as a unit, area, component, etc. is said to be located on another part, it includes not only the case where the part is directly located on top of the another part, but also the case where other units, areas, components, etc. are interposed therebetween.

In the following embodiments, terms such as "connected" or "coupled" do not necessarily mean "two members being directly and/or fixedly connected or coupled," unless otherwise specified within the context, and do not exclude the intervention of other members between the two members.

In the drawings, the sizes of components may be enlarged or exaggerated or reduced for convenience of explanation. For example, a size and a thickness of each component illustrated in the drawings are illustrative for convenience of description, and the embodiment below is not limited to the size and the thickness of the component illustrated.

Terms such as "top," "above," "bottom," "below," etc. used in this specification are merely used to easily describe the correlation between components shown in the drawings, and are not intended to limit a direction in which each component is disposed.

A curing process is a process of chemically bonding mixed rubber by applying a series of heat and pressure, and is performed to put a green tire completed in a forming process into a tire curing mold and apply heat and pressure steam to the green tire from inside and outside of the mold. The purpose of curing a green tire is to cause rubber to react with sulfur and other chemicals by applying heat and pressure to a flexible green tire made of the rubber. Through this chemical reaction, rubber molecules become a stable compound and gain elasticity, whereby a unique tread design of a tire is obtained by a curing mold.

In the related art tire curing device, a tire curing mold had to go through a process of manufacturing separate molds for various dimensions to match the dimensions of tires, manufacturing segments, which were variously embossed according to the shapes of tread patterns of the tires, and assembling the embossed segments in the molds. This caused problems that the mold manufacturing process and mold assembly process involved a significant amount of costs and manpower and a long process time.

The disclosure is proposed to solve the above problems, and relates to a tread mold and a tire curing mold that reduces manufacturing costs and time required for the development of new tire tread patterns and improve mold replacement costs according to dimensions of tires.

Hereinafter, the disclosure will be described in detail with reference to the drawings.

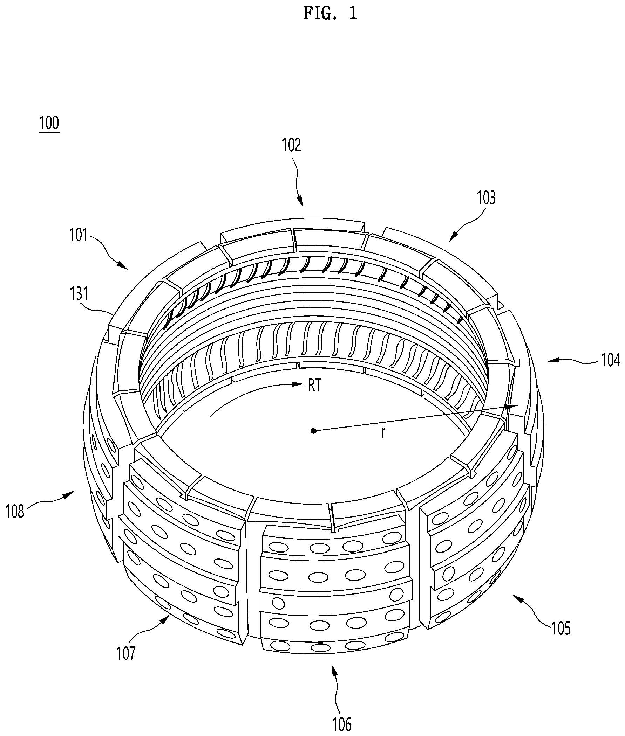

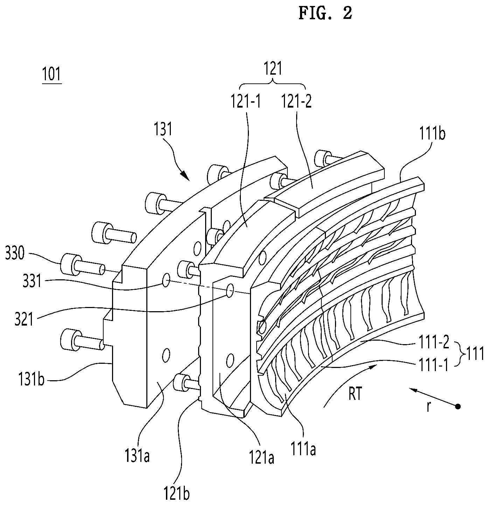

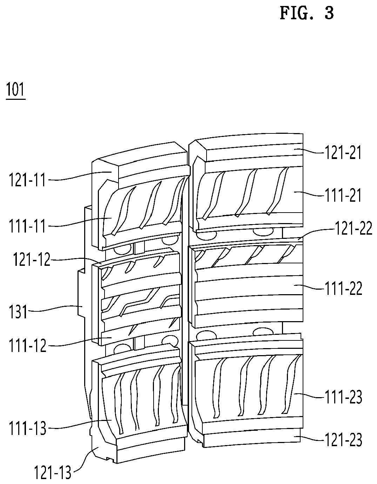

FIG. 1 is a perspective view illustrating a tread mold 100 according to one embodiment of the disclosure, and FIG. 2 is a partially exploded perspective view schematically illustrating the tread mold 100 according to one embodiment of the disclosure. Also, FIG. 3 is a partially exploded perspective view schematically illustrating a selective embodiment of the tread mold 100 of FIG. 1.

Referring to FIG. 1, a tread mold 100 according to an embodiment of the disclosure may include a plurality of sectors 101, 102, 103, 104, 105, 106, 107, and 108.

The tread mold 100 may be used in a curing process using a green tire (not illustrated). For example, tire tread sections (not illustrated) may be formed after the curing process to correspond to the green tire.

The plurality of sectors 101, 102, 103, 104, 105, 106, 107, and 108 forming the tread mold 100 may be disposed adjacent to one another along a circumferential direction RT to correspond to the tire tread sections, and thus be formed as a whole in a ring shape defining a hollow. In addition, FIG. 1 illustrates the tread mold 100 including eight sectors, but is illustrative and may alternatively be configured by varying the number of the plurality of sectors 101, 102, 103, 104, 105, 106, and 107 forming the tread mold 100.

The tread mold 100 will be described in detail with reference to FIG. 2. For example, one sector 101 is illustrated in FIG. 2.

For convenience of explanation, one sector 101 is illustrated, and the other sectors 102, 103, 104, 105, 106, 107, and 108 may be the same as the one sector 101, and may be applied by being modified within a similar range if necessary. Therefore, the descriptions of the other sectors 102, 103, 104, 105, 106, 107, and 108 will be omitted.

As an example, the one sector 101 of the tread mold 100 may include a pattern segment 111, a back segment 131, and a middle segment 121.

The pattern segment 111 may be formed to include a pattern surface 111a that is disposed toward the green tire during the curing process, the back segment 131 may be disposed outside the pattern segment 111, and the middle segment 121 may be arranged between the pattern segment 111 and the back segment 131.

The pattern segment 111 may be disposed adjacent to the surface of the green tire during the curing process, to form a pattern on the tire tread section.

Additionally, the back segment 131 may be disposed outside the pattern segment 111, for example, may be disposed outside the pattern segment 111 based on a radial direction r. As a specific example, the back segment 131 may be located on the outermost side of the tread mold 100 in the radial direction r.

Additionally, the back segment 131 may be coupled to a container (not illustrated) of a curing machine during a curing process.

The middle segment 121 may be disposed between the pattern segment 111 and the back segment 131, and a radial size of a hollow, which is formed by the tread mold 100, may increase or decrease by changing a width of the middle segment 121 in the radial direction r.

Additionally, in one embodiment, the back segment 131, the middle segment 121, and the pattern segment 111 may be formed to be attachable to and detachable from each other.

As a specific example, the back segment 131 and the middle segment 121 may further form fastening grooves at corresponding positions so as to be attachable to each other, and may further include fastening members. In addition, the middle segment 121 and the pattern segment 111 may further form fastening grooves 321 (and not illustrated) at positions corresponding to each other, so as to be attachable to each other, and may further include fastening members 330.

That is, the pattern segment 111 may change depending on a new pattern design or the middle segment 121 may change depending on an outer diameter of a tire, and the back segment 131 may change depending on a container type of a curing machine. Since these changes can be applied to the respective patterns, various types of tire molds suitable for various types of tires can be easily changed and prepared.

For a stable coupling structure, as a selective embodiment, the middle segment 121 may include a structure that further extends to surround both end portions of the pattern segment 111.

As one embodiment, the pattern segment 111 may include a coupling surface 111b formed on an opposite surface to the pattern surface 111a of the pattern segment 111, and the middle segment 121 may include an inner surface 121a formed on a surface facing the pattern segment 111. The coupling surface 111b and the inner surface 121a of the middle segment 121 may have shapes corresponding to each other.

As one embodiment, the middle segment 121 may include an outer surface 121b formed on an opposite surface to the inner surface 121a, and the back segment 131 may include a fastening surface 131a formed on a surface facing the middle segment 121. The outer surface 121b and the fastening surface 131b may have shapes corresponding to each other.

As one embodiment, the pattern surface 111a of the pattern segment 111 may include a curved surface shape corresponding to a green tire along a circumferential direction RT of the green tire, and the coupling surface 111b may include a flat surface shape.

As a selective embodiment, the pattern surface 111a of the pattern segment 111 may include a curved surface shape corresponding to a green tire along a circumferential direction RT of the green tire, and the coupling surface 111b may include a curved surface shape having a smaller curvature than the pattern surface 111a.

As a selective embodiment, the pattern surface 111a and the coupling surface 111b of the pattern segment 111 and the inner surface 121a of the middle segment 121 may include a curved surface shape corresponding to a green tire along a circumferential direction RT of the green tire, and the outer surface 121b of the middle segment 121 may include a flat surface shape.

As a selective embodiment, the pattern surface 111a and the coupling surface 111b of the pattern segment 111 and the inner surface 121a of the middle segment 121 may include a curved surface shape corresponding to a green tire along a circumferential direction RT of the green tire, and the outer surface 121b of the middle segment 121 may include a curved surface shape having a smaller curvature than the pattern surface 111a, the coupling surface 111b, and the inner surface 121a.

A curing process involves disposing a green tire in a curing mold, curing the green tire by supplying constant pressure and heat, and processing the cured green tire into an elastic rubber tire. It is important that constant heat and pressure are applied to the curing mold and green tire.

Therefore, the embodiments of the disclosure may include the structure and shape of the pattern segment 111, middle segment 121, and back segment 131 of the tread mold 100 to provide the tread mold 100 with improved heat transfer capability.

Specifically, the pattern segment 111, middle segment 121, and back segment 131 of the tread mold 100 may be formed such that the surfaces coupled to face each other have shapes corresponding to each other. That is, the coupling surface 111b and the inner surface 121a, and the outer surface 121b and the fastening surface 131a may have shapes corresponding to each other and may be coupled in surface contact with each other during the curing process, thereby securing a large heat transfer area. This can result in improving a heat transfer effect. In addition, the coupling surface 111b and the inner surface 121a, and the outer surface 121b and the fastening surface 131a may include surface shapes with a curvature that is mitigated toward outside, which can provide an effective heat transfer effect for more constantly transferring heat to an entire surface.

As one embodiment, a pair of middle segments 121-1 and 121-2 coupled to a pair of pattern segments 111-1 and 111-2 may be coupled to each other with respect to one piece of back segment (the single back segment) 131.

It is a structure that is configured by dividing each of the pattern segment 111 and the middle segment 121 into a pair. This structure can, as described above, facilitate the formation of each segment of the tread mold 100 including the surface shape with the curvature that is mitigated toward outside along the radial direction r. In addition, it is a structure configured such that the pair of pattern segments 111-1 and 111-2 and the pair of middle segments 121-1 and 121-2 are fastened by the one piece of back segment 131. This structure can integrate each divided piece to thus more facilitate the assembly to the container of the curing machine, and compensate for stress concentration areas that occur on the pattern segment 111 and the middle segment 121 due to the division to thus increase overall fastening force of the tread mold 100. At this time, the number of divided pattern segments 111 and middle segments 121 coupled by the single back segment 131 is illustrative, and of course, a plurality of segments other than a pair may be coupled.

As a selective embodiment, referring to FIG. 3, the pattern segment 111 may include a plurality of pattern puzzle pieces 111-11, 111-12, 111-13, 111-21, 111-22, and 111-23, and the middle segment 121 may include a plurality of middle puzzle pieces 121-11, 121-12, 121-13, 121-21, 121-22, and 121-23 corresponding to the plurality of pattern puzzle pieces 111-11, 111-12, 111-13, 111-21, 111-22, and 111-23. In addition, the plurality of pattern puzzle pieces 111-11, 111-12, 111-13, 111-21, 111-22, and 111-23 may be disposed adjacent to one another along the circumferential direction RT or a width direction of the tread mold 100. At this time, a mounting process may be carried out without a separate fixing member. As a selective embodiment, the tread mold 100 may further include fixing members or fastening members for stable disposition of the plurality of pattern puzzle pieces 111-11, 111-12, 111-13, 111-21, 111-22, 111-23 and the plurality of middle puzzle pieces 121-11, 121-12, 121-13, 121-21, 121-22, 121-23 during the curing process.

The pattern segment 111 is a member including an embossed pattern shape corresponding to the pattern shape of the tire tread section, and needs to be newly manufactured according to a new pattern design of the tire tread section. However, the tread mold 100 according to a selective embodiment of the disclosure can change only some of the plurality of pattern puzzle pieces 111-11, 111-12, 111-13, 111-21, 111-22, and 111-23. Accordingly, the tread mold 100 can be easily applied by changing according to a changed tread section pattern.

In other words, time spent when developing and changing the tread pattern formed on the pattern segment 111 and efforts and costs for design and the like can be reduced, thereby shortening an initial stage of development. Also, the variety of plural pattern puzzle pieces 111-11, 111-12, 111-13, 111-21, 111-22, and 111-23 which have been secured through the above process can be used in combination for tread pattern development in the future, thereby improving tread pattern development and production efficiency.

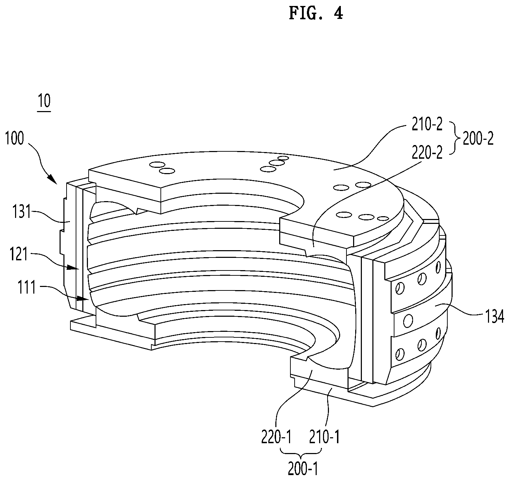

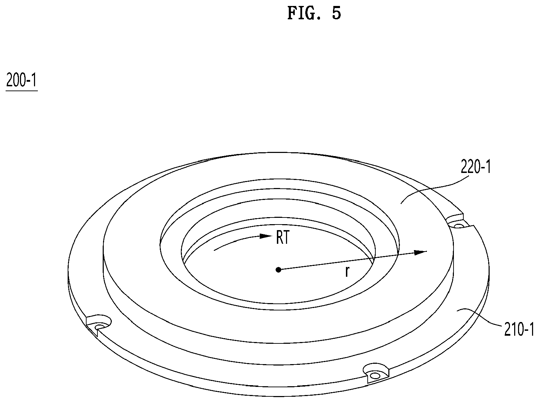

FIG. 4 is a perspective view illustrating a tire curing mold 10 according to one embodiment of the disclosure, and FIG. 5 is a perspective view schematically illustrating a first side mold 200-1 according to one embodiment of the disclosure.

Referring to FIG. 4, the tire curing mold 10 according to the disclosure may include a tread mold 100 and a side mold 200. At this time, the tread mold 100 may be applied in the same way as the tread mold 100 of the foregoing embodiments.

For convenience of explanation, a description will focus on differences from the foregoing embodiments.

The tire curing mold 10 may be used in a curing process using a green tire. For example, the tire curing mold 10 may be configured to form tire tread sections and sidewall sections after the curing process to correspond to the green tire.

As another embodiment of the disclosure, the side mold 200 of the tire curing mold 10 may include a first side mold 200-1 and a second side mold 200-2.

The first side mold 200-1 may be disposed on one side of the tread mold 100, which is disposed to face one surface of the green tire during the curing process.

The first side mold 200-1 may define a shape of a side surface of the tire adjacent to the tire tread after the curing process to correspond to a side surface of the green tire, for example, an area of a sidewall during the curing process using the green tire.

As a selective embodiment, the pattern segment 111 of the tread mold 100 may be disposed adjacent to the first side mold 200-1.

Additionally, the second side mold 200-2 may be disposed on the other side of the tread mold 100 to face the first side mold 200-1. The second side mold 200-2 may form a shape of a side surface of the tire adjacent to the tire tread after the curing process to correspond to a side surface of the green tire during the curing process using the green tire. That is, the first side mold 200-1 and the second side mold 200-2 may form one side surface of the tire and the other side surface opposite to the one side surface.

For convenience of explanation, the first side mold 200-1 is illustrated, and the second side mold 200-2 may be the same as the first side mold 200-1, and may be applied by being modified within a similar range if necessary. Therefore, a redundant description of the second side mold 200-2 will be omitted.

Referring to FIG. 5, in one embodiment, the first side mold 200-1 may include a base plate 210-1 and an inner plate 220-1.

Additionally, in one embodiment, the base plate 210-1 and the inner plate 220-1 may be formed to be attachable to and detachable from each other.

As a specific example, the base plate 210-1, 210-2 and the inner plate 220-1, 220-2 may further form fastening grooves at positions corresponding to each other so as to be attachable to each other, and may further include fastening members.

The base plate 210-1 may be coupled to the container of the curing machine during the curing process, and the inner plate 220-1 may be coupled to the base plate 220-1 during the curing process to form a profile of a sidewall section that is a side surface portion adjacent to the tread section of the tire.

The side mold 200 of the tire curing mold 10 according to the disclosure may be formed by being divided into the base plate 210-1 and the inner plate 220-1. Accordingly, only the inner plate 220-1 that matches a profile of a sidewall section of each type of tire can change with respect to the base plate 210-1 according to a type of container of a curing machine, thereby completing the preparation of the tire curing mold 10 for manufacturing a tire with a different profile of a sidewall section.

As a selective embodiment, the base plate 210-1 of the first side mold 200-1 may have a larger outer diameter than the base plate 210-2 of the second side mold 200-2. At this time, the first side mold 200-1 may be disposed adjacent to one side corresponding to a lower part of the tread mold 100, so that the structure of the tire curing mold 10 can be formed more stably.

As described above, in the tread mold 100 and the tire curing mold 10 according to the disclosure, when developing a new tire, a tread pattern can be quickly changed merely by replacing the pattern segment 111 or a new pattern can be developed, and various tire profiles can be applied merely by changing the middle segment 121 and the inner plate 220 according to tire profiles, thereby reducing pattern design and manufacturing time and costs.

In particular, a volume of a mold piece required to be manufactured can greatly decrease, which enables the manufacturing of the tire curing mold 10 according to an additive manufacturing method. A 3D printing technology, as a representative additive manufacturing method, produces a 3D printed output by melting a material at a high temperature and then layering the material while extruding the same at a certain pressure through an extrusion nozzle. The 3D printing manufacturing method is advantageous in realizing precise and complex shapes, but has problems of high cost and long production period.

However, in the tire curing mold 10 according to the disclosure, the volume of each part, which has to be manufactured according to the pattern of the tread section or the profile of the tire, has been reduced by segmenting manufacturing units, which results in significantly reducing the burden of cost and time consumption. In particular, only parts having complex shapes, such as the pattern segment 111 including the embossed pattern shape corresponding to the pattern shape of the tread section of the tire or the inner plate 220-1 forming the profile of the sidewall section, can be manufactured separately by adopting the additive manufacturing method.

Furthermore, upon manufacturing the tread mold 100 or the tire curing mold 10 by the additive manufacturing method, as a selective embodiment, the pattern segment 111 may include a plurality of hollow portions and support portions therein.

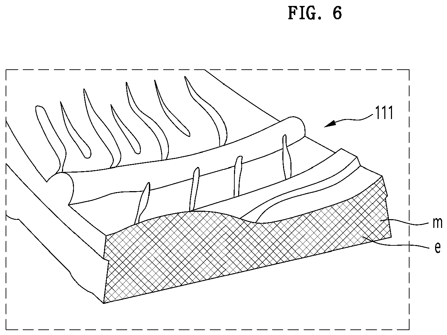

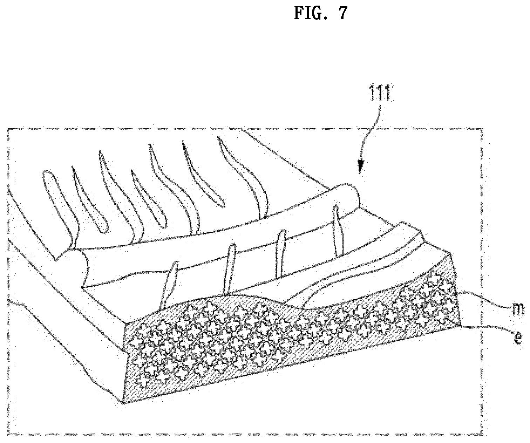

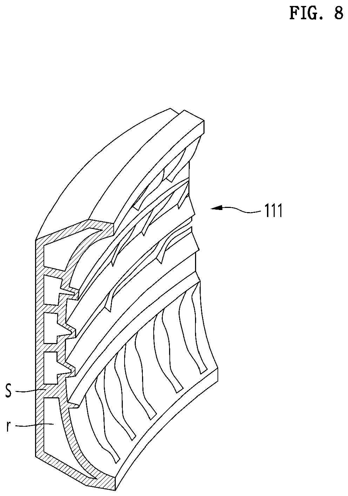

FIG. 6 is a partial cross-sectional view schematically illustrating a pattern segment according to a selective embodiment of the disclosure, and FIG. 7 is a partial cross-sectional view schematically illustrating a pattern segment according to another selective embodiment of the disclosure. Additionally, FIG. 8 is a partial cross-sectional view schematically illustrating a pattern segment according to still another selective embodiment of the disclosure.

Hereinafter, the structures of the tread mold 100 and the tire curing mold 10 that can be manufactured by the additive manufacturing method will be described in detail, with reference to FIGS. 6 to 8. FIGS. 6 and 7 illustrate the pattern segment 111 by way of example, but the disclosure may be, of course, applied to other parts, such as the middle segment 121 and the back segment 131, included in the tread mold 100 and the tire curing mold 10.

For example, referring to FIG. 6, the pattern segment 111 may include therein mesh-shaped support portions m forming a support structure, and hollow portions e existing between the mesh-shaped support portions m.

As a more specific selective embodiment, referring to FIG. 7, the pattern segment 111 may include therein mesh-shaped support portions m forming a support structure, and hollow portions e existing between the mesh-shaped support portions m. The mesh-shaped support portions m and the hollow portions e may include shapes that form certain patterns on a cross-section of the pattern segment 111.

In addition, for example, referring to FIG. 8, the pattern segment 111 may include a surface support portion s having a certain thickness from a surface thereof, and a skeletal hollow portion r that is hollow and surrounded by the surface support portion s.

The mesh-shaped support portion m and the hollow portion e illustrated in FIG. 6 and the surface support portion s and the skeletal hollow portion r illustrated in FIG. 8 are exemplary internal structures of the tread mold 100 and the tire curing mold 10, and may be modified to various shapes for forming a plurality of hollow portions and support portions.

In addition, the support portion must be designed to maintain its shape without deformation, such as sagging, due to heat and pressure even during tire curing. Therefore, in the mold, a surface portion that forms the surface of the mold or an assembly portion to be assembled with another mold may employ a shape without the hollow portion e.

By manufacturing the inside of the tread mold 100 and the tire curing mold 10 to have the hollow portions other than a solid form filled with a material, the manufacturing method by layering (stacking) a material can remarkably shorten a manufacturing period in manufacturing components using the additive manufacturing method. In addition, since the consumption of expensive powder materials used in the additive manufacturing can be reduced by the volume of the hollow portions, manufacturing costs can also be greatly saved. Furthermore, the weight of the tread mold 100 and the tire curing mold 10, which include the hollow portions therein, can greatly decrease, thereby reducing the workload of workers who assemble and disassemble the molds during the tire curing process.

In addition, the tread mold 100 and tire curing mold 10 according to the disclosure have the advantages of reducing the scale of a warehouse and facilitating the change of patterns in various ways, by virtue of storing only the pieces of the tread mold 100 and the tire curing mold 10, volume of which are more reduced than the volume of pieces of the existing tire curing mold.

As described above, there is also an advantage that the standardized pattern segment 111 applied to the tread mold 100 can be changed merely by assembling a replacement or a new product for the future, in the case where the pattern segment 111 is stored in the warehouse in addition to the new development of the pattern segment 111. In addition, since a worker can quickly replace the pattern segment at the production site, there is an advantage of improving productivity in tire manufacturing.

As such, the disclosure has been described with reference to one embodiment illustrated in the drawings, but is merely illustrative, and it will be understood by those of skilled in the art that various modifications and variations of the embodiment can be made. Therefore, the true technical protection scope of the disclosure should be defined by the technical spirit of the appended claims.

A tread mold and tire curing mold according to embodiments of the disclosure can improve convenience and efficiency of a tire curing process.

As a specific example, a mold part that forms a pattern on a surface of a tire can be replaced separately, and thus even if a pattern is changed, a tire of a new pattern can be manufactured merely by manufacturing a mold part that has the changed pattern other than newly manufacturing an entire mold.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A tread mold formed for use in a curing process for a green tire, the tread mold comprising:
a pattern segment comprising a pattern surface disposed to face the green tire during a curing process;
a back segment disposed outside the pattern segment; and
a middle segment arranged between the pattern segment and the back segment.

2. The tread mold of claim 1,
wherein the back segment, the middle segment, and the pattern segment are formed to be attachable to and detachable from each other.

3. The tread mold of claim 1,
wherein the pattern segment comprises a coupling surface formed on a surface opposite to the pattern surface of the pattern segment, and the middle segment comprises an inner surface on a surface facing the pattern segment, and
the coupling surface and the inner surface of the middle segment have shapes corresponding to each other.

4. The tread mold of claim 3,
wherein the middle segment comprises an outer surface formed on a surface opposite to the inner surface, and the back segment comprises a fastening surface on a surface facing the middle segment, and
the outer surface and the fastening surface have shapes corresponding to each other.

5. The tread mold of claim 4,
wherein the pattern surface of the pattern segment comprises a curved surface shape corresponding to the green tire along a circumferential direction of the green tire, and the fastening surface comprises a flat surface shape.

6. The tread mold of claim 5,
wherein a pair of middle segments coupled to a pair of pattern segments are coupled to correspond to a piece of back segment.

7. The tread mold of claim 1,
wherein the pattern segment comprises a plurality of pattern puzzle pieces, and the middle segment comprises a plurality of middle puzzle pieces corresponding to the plurality of pattern puzzle pieces.

8. A tire curing mold formed to perform a curing process for a green tire, the tire curing mold comprising:
a tread mold disposed to face one surface of the green tire during the curing process;
a first side mold disposed on one side of the tread mold; and
a second side mold disposed on another side of the tread mold to face the first side mold,
wherein the tread mold comprises: a pattern segment including a pattern surface disposed to face the green tire during the curing process;
a back segment disposed outside the pattern segment; and
a middle segment arranged between the pattern segment and the back segment.

9. The tire curing mold of claim 8,
wherein the first side mold or the second side mold comprises:
a base plate coupled to a container of a curing machine during the curing process; and
an inner plate coupled to the base plate to form a profile of a sidewall section of a tire.

10. The tire curing mold of claim 9,
wherein the base plate and the inner plate are formed to be attachable to and detachable from each other.

11. The tire curing mold of claim 1,
wherein the pattern segment comprises a plurality of hollow portions and support portions therein.

12. The tire curing mold of claim 9,
wherein the inner plate comprises a plurality of hollow portions and support portions therein.
